# EUROPÄISCHE PATENTANMELDUNG

(11) **EP 1 542 423 A1**
(43) Veröffentlichungstag der Anmeldung: **15.06.2005**
(21) Anmeldenummer: 03028166.1
(22) Anmeldetag: 08.12.2003
(51) Int. Cl.: H04L 29/06

(54) **Kommunikationssystem zur Verwendung mehrerer Kommunikationsprotokolle**

(71) Anmelder: SIEMENS AKTIENGESELLSCHAFT, 80333 München (DE)
(72) Erfinder: Bozionek, Bruno, 33178 Borchen (DE); Hemkemeyer, Dieter, 59302 Ölde (DE); Kunte, Klaus-Josef, 33178 Borchen (DE); Littmann, Jörg, 33129 Delbrück (DE); Uecker, Rainer, 45470 Mülheim (DE); Zimmermann, Rainer, 33106 Paderborn (DE)

(57) **Zusammenfassung**

In einem Kommunikationssystem (KS) werden mehrere Kommunikationsprotokolle verwendet, wobei für jedes der zu verwendenden Kommunikationsprotokolle ein kommunikationsprotokollspezifischer Protokoll-Stack (PS1, PS2) angeordnet ist. Eine zentrale Steuerung (ZS) tauscht dazu Nachrichten in einem normalisierten Nachrichten-Format (NP) mit einem Stack-Adapter-Manager (SAM) aus. Der Stack-Adapter-Manager (SAM) ist mit einer Mehrzahl Stack-Adaptern (SA1, SA2) zum Austausch der Nachrichten in dem normalisierten Nachrichten-Format (NP) verbunden, wobei jeder Stack-Adapter (SA1, SA2) zum Austausch der Nachrichten in einem jeweiligen kommunikationsprotokoll-spezifischen Nachrichten-Format mit jeweils einem zugeordneten der Protokoll-Stacks (PS1, PS2) verbunden ist. Jeder Stack-Adapter (SA1, SA2) ist zur Umsetzung der Nachrichten zwischen dem normalisierten Nachrichten-Format (NP) und dem jeweiligen kommunikationsprotokoll-spezifischen Nachrichten-Format ausgebildet. Der Stack-Adapter-Manager (SAM) dient der Weiterleitung der von der zentralen Steuerung empfangenen Nachrichten zu demjenigen Stack-Adapter (SA1, SA2), dessen zugeordneter Protokoll-Stack (PS1, PS2) zur Verarbeitung der jeweiligen Nachrichten geeignet ist, und umgekehrt zur Weiterleitung der von den Stack-Adaptern (SA1, SA2) empfangenen Nachrichten zu der zentralen Steuerung (ZS).

## Beschreibung

Die Erfindung betrifft ein Kommunikationssystem zur Verwendung mehrerer Kommunikationsprotokolle und ein Verfahren zur Verwendung mehrerer Kommunikationsprotokolle in einem Kommunikationssystem.

Kommunikationsanordnungen zur Übertragung von Sprach-, Telefax-, Video- und sonstigen Kommunikationsverbindungen bestehen aus Kommunikationsendgeräten (kurz: Endgeräte) und einer zentralen Vermittlungseinrichtung, die häufig auch "Kommunikationssystem" genannt wird. In dem Kommunikationssystem werden für eine Kommunikationsverbindung zwei oder mehr Endgeräte miteinander verknüpft.

Während in der "klassischen" Telephonie jedes Endgerät mit einer eigenen Leitung an dem zugeordneten Kommunikationssystem angeschlossen ist, sind in den "modernen" Sprachdatennetzen (VoIP-Netzwerke) die Endgeräte und das Kommunikationssystem über ein Datennetzwerk miteinander verbunden. In diesen Sprachdatennetzen werden Kommunikationsverbindungen derart aufgebaut, dass durch die zentrale Steuerung des Kommunikationssystems jedem der Endgeräte, welches an einer Kommunikationsverbindung teilnehmen soll, eine Adressinformation (z.B. Netzwerkadresse) des Endgerätes des gewünschten Kommunikationspartners übermittelt wird. Es handelt sich also um einen "logischen" Verbindungsaufbau, weil nicht Leitungen physikalisch miteinander verbunden werden, sondern logische Datenkanäle etabliert werden. Der Austausch der Nutzdaten (Nutzinformationen) findet dann anhand der übermittelten Adressinformationen direkt zwischen den Endgeräten der Kommunikationsverbindung statt.

Zur Kommunikation zwischen einem Endgerät und einem Kommunikationssystem einerseits und zum Austausch der Nutzdaten zwischen den Endgeräten andererseits werden in den Datennetzen dafür geeignete Kommunikationsprotokolle verwendet. Beispielsweise wird zum Austausch der Nutzinformationen zwischen den Endgeräten häufig das RTP/RTCP-Protokoll (real time protocol/real time control protocol) verwendet, während für den Datenaustausch zwischen Endgeräten und Kommunikationssystemen, also mithin für den Auf- und Abbau von Kommunikationsverbindungen, häufig das ITU-T-H.323-Protokoll (kurz: H.323) oder das IETF-SIP-Protokoll (kurz: SIP) verwendet wird.

Zur Steuerung von Kommunikationsverbindungen werden also zwischen den Endgeräten und dem Kommunikationssystem und damit mit der zentralen Steuerung des Kommunikationssystems Steuerinformationen in Form von Nachrichten ausgetauscht, die jeweils nach den Anforderungen des benutzten Kommunikationsprotokolls aufgebaut sein müssen. Dazu wird in Kommunikationssystemen zumeist eine Komponente verwendet, die auch als "Protokoll-Stack" bezeichnet wird. Die Nachrichten, die von einem Endgerät zu einem Kommunikationssystem versendet werden, werden in dem Kommunikationssystem zunächst von dem Protokoll-Stack verarbeitet, der für die Verarbeitung von Nachrichten des jeweiligen benutzten Kommunikationsprotokolls eingerichtet ist. Die Komponente "Protokoll-Stack" sorgt in eigenständiger Weise für den protokollgemäßen Transport der Nachrichten zwischen dem jeweiligen Endgerät und dem Kommunikationssystem. So werden beispielsweise in den bekannten Sprachdatennetzen die Nachrichten in Form von Datenpaketen transportiert, wobei ein Datenpaket neben der eigentlichen Nachricht (Nutzinformation) eine Anzahl weiterer Informationen umfasst, die für den sicheren Transport der Nachricht in dem Datennetz notwendig sind. Diese zusätzlichen Informationen werden nach dem Empfang des Datenpaketes durch den Protokoll-Stack entfernt, so dass der Protokoll-Stack die eigentliche Nachricht, also die Nutzinformation des Datenpaketes, zu der zentralen Steuerung des Kommunikationssystems weiterleiten kann. Dabei entspricht diese weitergeleitete Nachricht immer noch den Regeln des jeweils verwendeten Kommunikationsprotokolls, z.B. H.323 bzw. SIP.

Bei den bekannten Kommunikationssystemen hat sich als nachteilig herausgestellt, dass die zentrale Steuerung bei der Verwendung mehrerer verschiedener Kommunikationsprotokolle mit mehreren verschiedenen Protokoll-Stacks Nachrichten austauschen muss. Die dabei ausgetauschten Nachrichten befinden sich jeweils in dem Datenformat des jeweiligen Kommunikationsprotokolls, so dass die zentrale Steuerung für jedes verwendete Kommunikationsprotokoll angepasst werden muss. Dazu sind die verwendeten Protokoll-Stacks oft sogar in der zentralen Steuerung integriert. Wenn in einem Kommunikationsnetzwerk ein weiteres, neues Kommunikationsprotokoll verwendet werden soll, muss in dem Kommunikationssystem sowohl ein weiterer, neuer Protokoll-Stack implementiert werden, als auch eine Anpassung (Erweiterung) der zentralen Steuerung zur Verarbeitung von Nachrichten im Format des neuen Kommunikationsprotokolls erfolgen.

Es ist daher eine Aufgabe der vorliegenden Erfindung, die Änderung bzw. Erweiterung von Kommunikationsprotokollen in Kommunikationsnetzwerken zu vereinfachen.

Die Aufgabe wird für das Kommunikationssystem durch die Merkmale des Patentanspruchs 1 und für das Verfahren durch die Merkmale des Patentanspruchs 6 gelöst.

Die Lösung sieht für das Kommunikationssystem vor, dass Stack-Adapter vorgesehen werden, wobei jeder der Stack-Adapter zur Umsetzung der Nachrichten zwischen dem normalisierten Nachrichtenformat und dem jeweiligen Kommunikationsprotokoll-spezifischen Nachrichten-Format ausgebildet ist, und dass ein Stack-Adapter-Manager verwendet wird, der für die Weiterleitung der von der zentralen Steuerung empfangenen Nachrichten zu demjenigen Stack-Adapter eingerichtet ist, dessen zugeordneter Protokoll-Stack zur Verarbeitung der jeweiligen empfangenen Nachrichten geeignet ist, und der Stack-Adapter-Manager zur Weiterleitung der von den Stack-Adaptern empfangenen Nachrichten zu der zentralen Steuerung ausgebildet ist.

Die Lösung sieht für das Verfahren vor, dass zur Übertragung einer Steuernachricht von einer zentralen Steuerung des Kommunikationssystems zu einem Endgerät folgende Verfahrensschritte nacheinander ausgeführt werden:

Zuerst erfolgt die Übertragung der mit einer Adressinformation des Endgerätes versehenen Steuernachricht gemäß eines normalisierten Formates von der zentralen Steuerung zu einem Stack-Adapter-Manager. Danach erfolgt die Entscheidung in dem Stack-Adapter-Manager, welches einer Mehrzahl von Kommunikationsprotokollen diesem Endgerät zugeordnet ist, wobei die Entscheidung durch Abruf eines der Adressinformation zugeordneten Datensatzes aus einer Datenbank getroffen wird und wobei der Datensatz das Kommunikationsprotokoll angibt. Danach erfolgt die Übertragung der Steuernachricht in dem normalisierten Format vom Stack-Adapter-Manager zu einem dem zugeordneten Kommunikationsprotokoll entsprechenden Stack-Adapter. Anschließend wird durch den Stack-Adapter die Steuernachricht in das Format des zugeordneten Kommunikationsprotokolls umgesetzt. Diese umgesetzte Steuernachricht wird dann zu einem dem Stack-Adapter zugeordneten Protokoll-Stack übertragen. Nachfolgend findet die Verarbeitung der Steuernachricht durch den Protokoll-Stack und die Weiterleitung der verarbeiteten Steuernachricht von dem Protokoll-Stack zu dem Endgerät statt.

Das Kommunikationssystem ist durch die abhängigen Patentansprüche 2 bis 5 vorteilhaft weiterausgebildet, wobei die Vorteile der abhängigen Patentansprüche sinngemäß auch für das erfindungsgemäße Verfahren gelten.

Die zentrale Steuerung kann auf eine Schnittstelle zum Austausch von Nachrichten beschränkt werden, indem der Stack-Adapter-Manager zur Weiterleitung der von der zentralen Steuerung empfangenen Nachrichten mit einer Routing-Funktion ausgestattet ist, wobei die von der zentralen Steuerung empfangenen Nachrichten an zumindest ein Endgerät adressiert sind, und wobei der Stack-Adapter-Manager mit einer Datenbank ausgestattet ist, in der das zumindest eine Endgerät einem der Stack-Adapter zugeordnet ist.

Diese Datenbank kann auf einfache Weise gepflegt werden, wenn der Stack-Adapter-Manager zum Empfangen von Endgeräte-Registrierungsinformationen von den Stack-Adaptern ausgebildet ist, wobei der Stack-Adapter-Manager zur Registrierung dieser Endgeräte bei der zentralen Steuerung mit den Endgeräte-Registrierungsinformationen eingerichtet ist, und wobei der Stack-Adapter-Manager bei jeder Registrierung eines Endgerätes in seiner Datenbank die Zuordnung dieses Endgerätes zu demjenigen der Stack-Adapter speichert, von dem die Endgeräte-Registrierungsinformationen dieses Endgerätes empfangen wurden.

Zum Austausch von Nutzdaten zwischen den Endgeräten, der in den Sprachdatennetzen in der Regel direkt erfolgt, kann eines von mehreren Nutzdaten-Protokollen verwendet werden, welches von den beiden bzw. allen Endgeräten der Kommunikationsverbindung unterstützt wird. Diese Auswahl erfolgt vorteilhaft so, dass in der Datenbank des Stack-Adapter-Managers Informationen über die von den Endgeräten jeweils unterstützten Nutzdaten-Protokolle gespeichert sind und der Stack-Adapter-Manager zur Auswahl und Zuweisung eines der Nutzdaten-Protokolle für eine aufzubauende direkte Nutdatenverbindung zwischen Endgeräten ausgebildet ist.

In den Fällen, in denen das Nutzdatenprotokoll generell festgelegt ist (z.B. das RTP-Protokoll; RTP = Real-Time Protocol), wird über das Signalisierungsprotokoll selbstverständlich kein Nutzdatenprotokoll ausgehandelt, sondern es werden dann lediglich die Information über benutzte Ports und andere für das festgelegte Nutzdatenprotokoll wichtige Einstellungen ausgetauscht.

Das erfindungsgemäße Kommunikationssystem kann mit einer Vielzahl gebräuchlicher Endgeräte Nachrichten austauschen, wenn für die von den Endgeräten verwendeten Kommunikationsprotokolle jeweils ein passender Protokoll-Stack und Stack-Adapter verfügbar ist. Dabei sind das IETF-SIP-Protokoll und das ITU-T-H.323-Protokoll Beispiele für gebräuchliche Kommunikationsprotokolle, für die oftmals schon Protokoll-Stacks verfügbar sind.

Ausführungsbeispiele zur Erläuterung des erfindungsgemäßen Kommunikationssystems sind nachfolgend anhand der Zeichnung erläutert und dienen gleichzeitig der Erläuterung eines Ausführungsbeispiels des erfindungsgemäßen Verfahrens.

Dabei zeigen:
- Figur 1: in schematischer Darstellung ein Kommunikationssystem mit einem Stack-Adapter-Manager, Stack-Adaptern, Protokoll-Stacks und daran angeschlossenen Endgeräten, und
- Figur 2: in detaillierterer schematischer Darstellung das Kommunikationssystem mit den daran angeschlossenen Endgeräten.

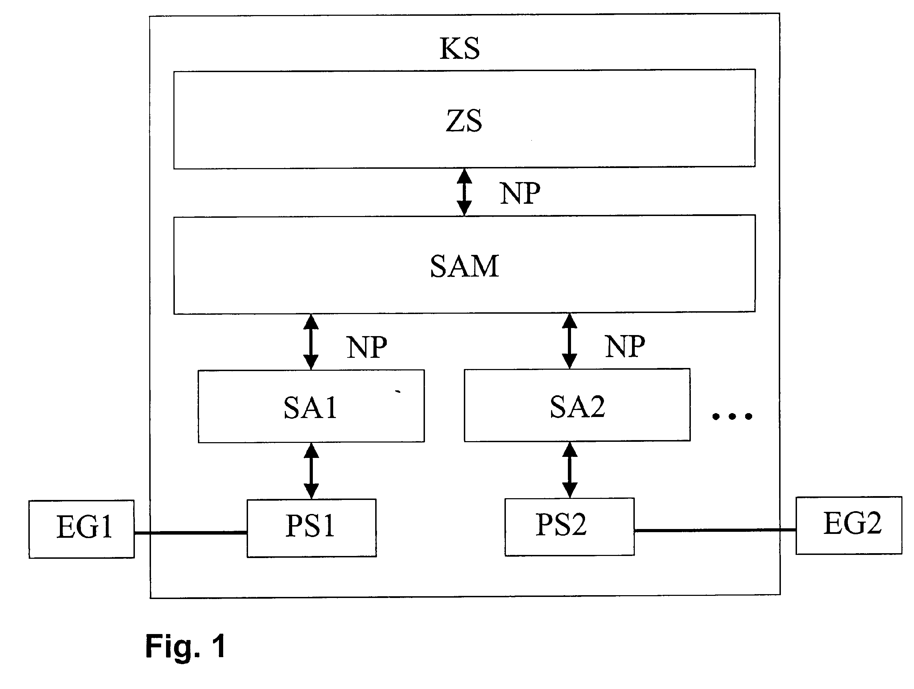

In der Figur 1 ist das Kommunikationssystem KS dargestellt, welches als logischer Kommunikationsknoten in einem Sprachdatennetz (VoIP-Kommunikationsnetzwerk) verwendet wird. Das Kommunikationssystem KS ist mit einer zentralen Steuerung ZS ausgestattet, die der Vermittlung von Kommunikationsverbindungen dient. In den Sprachdatennetzen, die das H.323-Protokoll verwenden, sind solche Kommunikationssysteme auch als "Gatekeeper" bekannt, und in den Sprachdatennetzen, welche das SIP-Protokoll verwenden, werden solche Kommunikationssysteme auch als "SIP-Proxy-Server" bezeichnet.

Die zentrale Steuerung ZS des Kommunikationssystems KS kommuniziert mit einem weiteren Funktionsblock, dem Stack-Adapter-Manager SAM. Die Kommunikation zwischen der zentralen Steuerung ZS und dem Stack-Adapter-Manager SAM findet gemäß eines "normalisierten" Protokolls statt. Abweichend von der Darstellung in der Figur 1 können mit der zentralen Steuerung ZS auch weitere Funktionsblöcke, mithin auch weitere Stack-Adapter-Manager, verbunden sein, wobei in solchen Fällen vorteilhafter Weise auch die Kommunikation zwischen der zentralen Steuerung ZS und den weiteren Funktionsblöcken anhand des gleichen normalisierten Protokolls stattfindet.

Zum Zwecke des Datenaustausches, also zur Übertragung von Nachrichten (Steuernachrichten, Steuermeldungen), sind an den Stack-Adapter-Manager SAM als weitere Funktionsblöcke mehrere Stack-Adapter SA1, SA2 im Sinne einer datentechnischen Verbindung angeschlossen. Dabei wird hier für die Übertragung der Nachrichten zwischen dem Stack-Adapter-Manager SAM und dem Stack-Adaptern SA1, SA2 jeweils das gleiche, normalisierte Protokoll NP verwendet, welches auch für die Kommunikation zwischen der zentralen Steuerung ZS und dem Stack-Adapter-Manager SAM verwendet wird.

Mit jedem der Stack-Adapter SA1, SA2 ist jeweils ein Protokoll-Stack PS1, PS2 verbunden, wobei in dem vorliegendem Ausführungsbeispiel der Protokoll-Stack PS1 ein H.323-Protokoll-Stack ist und der Protokoll-Stack PS2 ein SIP-Protokoll-Stack. Die Nachrichten, die zwischen dem Stack-Adapter SA1 und dem Protokoll-Stack PS1 ausgetauscht werden, werden demzufolge gemäß des H.323-Protokolls ausgetauscht, während der Nachrichtenaustausch zwischen dem Stack-Adapter SA2 und dem Protokoll-Stack PS2 gemäß des SIP-Protokolls erfolgt. Der Stack-Adapter SA1 hat dabei also im wesentlichen die Aufgabe, das normalisierte Protokoll NP in das Protokoll (H.323) des Protokoll-Stacks PS1 umzusetzen, und umgekehrt; analog gilt das auch für den Protokoll-Stack PS2 mit dem Stack-Adapter SA2 und das SIP-Protokoll.

An das Kommunikationssystem KS angeschlossen sind Endgeräte EG1, EG2, wobei das Endgerät EG1 für den Austausch von Signalisierungs-Nachrichten das H.323-Protokoll verwendet, während das Endgerät EG2 für solche Nachrichten das SIP-Protokoll verwendet. Dementsprechend kommuniziert das Endgerät EG1 mit dem Protokoll-Stack PS1 des Kommunikationssystems KS, während das Endgerät EG2 mit dem Protokoll-Stack PS2 verbunden ist. Diese Verbindungen sind nicht als direkte physikalische Verbindungen im Sinne einer elektrischen Leitung ausgeführt, sondern stellen eine logische Verknüpfung in Form von logischen Verbindungen ("Kanälen") über ein Datennetz (Sprachdatennetz) dar. In dem vorliegenden Beispiel wird dazu das bekannte Internet-Protokoll verwendet.

In den Ausführungsbeispielen sind als Kommunikations-Partner des Kommunikationssystems zwar Endgeräte angeschlossen, allerdings können in gleicher Weise auch Amtsschnittstellen, vernetzte Kommunikationsknoten, Applikationsserver etc. an einen der Protokoll-Stacks angeschlossen sein.

Im Folgenden wird anhand der Figur 1 beschrieben, in welcher Weise eine zu Steuerungszwecken, beispielsweise zur Initiierung eines Verbindungsaufbaus, versendete Nachricht des Endgerätes EG1 zu der zentralen Steuerung ZS des Kommunikationssystems KS übertragen wird. Dabei wird davon ausgegangen, dass sich EG1 und EG2 vorher registriert haben. Die Nachricht wird von dem Endgerät EG1 in Form einer H.323-Protokollkonformen Nachricht mit Hilfe des Internet-Protokolls (TCP-IP; Transfer Control Protocol - Internet Protocol) über das (hier nicht dargestellt) Sprachdatennetz zu dem H.323-Protokoll-Stack PS1 des Kommunikationssystems KS übertragen. Der Protokoll-Stack PS1 verarbeitet die empfangene Nachricht derart, dass die Nachricht auf die für die zentrale Steuerung ZS bestimmten Anteile reduziert wird. D.h., dass beispielsweise solche Anteile der Nachricht, die die Adressierung des H.323-Protokoll-Stacks PS1 bewirken bzw. den Transport der Daten über das Sprachdatennetz mit Hilfe des TCP-IP-Protokolls bewirken, entfernt werden. Die derart aufbereitete Nachricht, die nach wie vor im Format des H.323-Protokolls vorliegt, wird nun von dem Protokoll-Stack PS1 zu dem Stack-Adapter SA1 übertragen. Der Stack-Adapter SA1 setzt die Nachricht in die Form eines normalisierten Protokolls NP um (solche Protokolle werden häufig auch als generische Protokolle bezeichnet) und übermittelt die Nachricht an den Stack-Adapter-Manager SAM.

Als normalisiertes Protokoll wird hier ein intern in dem Kommunikationssystem verwendetes Protokoll verstanden, welches den Funktionsumfang mehrerer (im besten Falle: aller) extern verwendeter Kommunikationsprotokolle abzubilden vermag.

Der Stack-Adapter-Manager SAM stellt fest, dass die Nachricht für die zentrale Steuerung ZS des Kommunikationssystems bestimmt ist und übermittelt diese Nachricht, weiterhin in Form des normalisierten Protokolls NP, zu der zentralen Steuerung ZS.

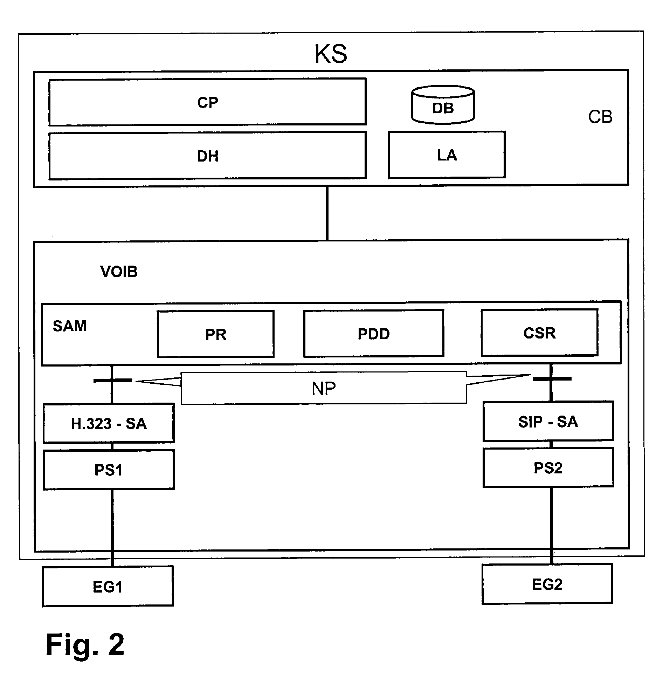

Die Figur 2 zeigt den aus der Figur 1 bekannten Kommunikationsserver KS in einer detaillierteren Darstellung. Die in der Figur 2 mit aus der Figur 1 bekannten Bezugszeichen versehenen Komponenten und Elemente bezeichnen dieselben Elemente aus der Figur 1 und werden bei der Beschreibung der Figur 2 nicht erneut eingeführt.

Das Kommunikationssystem KS ist modular aufgebaut und besteht aus einem Zentralrechner CB (Central Board) und einer VoIP-Baugruppe VOIB (Voice-over-IP-Board). Der Zentralrechner CB und die VoIP-Baugruppe VoIB sind als Einsteckkarten ausgeführt und über eine (hier nicht dargestellte) passive Backplane eines Einschubgehäuses ("Rack") verbunden. Der Zentralrechner CB umfasst die Funktionsgruppen Call-Processing CP, Device-Handler DH, Licensing Agent LA und Database DB. Diese vier Haupt-Funktionsmodule bilden im wesentlichen die aus der Figur 1 bekannte zentrale Steuerung ZS. Das Call-Processing CP dient dabei der Vermittlung von Kommunikationsverbindungen zwischen den Endgeräten EG1, EG2, welche an dem Kommunikationssystem angeschlossen bzw. angemeldet sind. Der Device-Handler DH hält Funktionen bereit, die den Zugriff auf jedwede Hardware erlauben, die mit dem Kommunikationssystem KS verbunden ist bzw. von diesem angesteuert wird. Der Licensing-Agent LA dient der Registrierung von Endgeräten und anderen Komponenten, die zur Kommunikation mit dem oder über das Kommunikationssystem KS vorgesehen sind. Alle vorbeschriebenen Funktionsblöcke haben Zugriff auf eine gemeinsame Datenbank (Database DB), in der beispielsweise Registrierungsinformationen und Eigenschaften der angeschlossenen Endgeräte EG1, EG2 sowie anderer Hardware gespeichert wird.

Die VoIP-Baugruppe VOIB umfasst zur Kommunikation mit den Endgeräten EG1, EG2 die Protokoll-Stacks PS1 und PS2, die aus der Figur 1 bereits bekannt sind. Der Protokoll-Stack PS1 ist dabei mit einem für das H.323-Protokoll ausgelegten Stack-Adapter H.323-SA verbunden, während der SIP-konforme Protokoll-Stack PS2 mit dem Stack-Adapter SIP-SA kommuniziert.

Die VoIP-Baugruppe VOIB weist weiterhin den bereits anhand der Figur 1 beschriebenen Stack-Adapter-Manager SAM auf. Dieser gliedert sich in drei wesentliche Funktionsmodule, nämlich den Protokoll-Router PR, die Payload-Description-Data PDD und das Modul Comm-Server-Registration CSR. Das Funktionsmodul Comm-Server-Registration CSR ist zur Entgegennahme von Registrierungsanforderungen der Endgeräte EG1, EG2 ausgelegt. Diese Registrierungsanforderungen werden von den Endgeräten EG1, EG2 beispielsweise bei einem Neustart der Endgeräte EG1, EG2 in dem Sprachdatennetz an den Zentralrechner CB des Kommunikationssystems KS versendet. Die Registrierungsanforderungen durchlaufen den jeweiligen Protokoll-Stack PS1, PS2 und den jeweiligen Stack-Adapter H.323-SA, SIP-SA und gelangen so zu dem Stack-Adapter-Manager SAM. Der Stack-Adapter-Manager SAM nimmt sodann die Registrierung der Endgeräte EG1, EG2 stellvertretend (man sagt auch: "als Proxy") für diese bei dem Zentralrechner CB vor. Dabei wird eine ganze Reihe an Informationen von den Endgeräten EG1, EG2 zu dem Zentralrechner CB übermittelt, wobei das Funktionsmodul Comm-Server-Registration CSR die für den Stack-Adapter-Manager relevanten Informationen in einer (hier nicht dargestellten) Datenbank des Stack-Adapter-Managers SAM speichert. Diese Informationen betreffen insbesondere die von den Endgeräten EG1, EG2 verwendbaren Nutzdaten-Protokolle, die als Payload-Description-Data PDD zwischengespeichert werden. Ein Verbindungsaufbau (Vermittlung) zwischen den Endgeräten EG1, EG2 wird zwar in erster Linie durch das Call-Processing CP des Zentralrechners CB durchgeführt, beispielsweise die Zuweisung der Nutzdatenkanäle, aber die Entscheidung darüber, welches Kommunikationsprotokoll zum Austausch der Nutzdaten zwischen den Endgeräten EG1, EG2 für die zugewiesenen Nutzdatenkanäle verwendet wird, wird in dem Stack-Adapter-Manager SAM getroffen, und zwar auf Grundlage der gespeicherten Payload-Description-Data PDD. Die Payload-Description-Data PDD geben dabei an, in welcher Weise die Nutzdaten zu codieren sind, also z.B. die Art der zu nutzenden Sprachkomprimierung, der zu verwendende Video-Standard etc..

Das Funktionsmodul Protokoll-Router PR des Stack-Adapter-Managers SAM greift ebenfalls auf die von dem Funktionsmodul Comm-Server-Registration CSR gesammelten Informationen zurück. Der Protokoll-Router PR sorgt dafür, dass Nachrichten (Steuerinformationen), die von der zentralen Steuerung ZS und damit von dem Zentralrechner CB zu einem der Endgeräte EG1, EG2 versendet werden, von dem Stack-Adapter-Manager SAM an den richtigen der Stack-Adapter H.323-SA, SIP-SA geleitet werden. Durch die Registrierung der Endgeräte EG1, EG2 liegt nämlich in dem Stack-Adapter-Manager SAM die Information darüber vor, an welchem der Protokoll-Stacks PS1, PS2 und damit über welchen der Stack-Adapter H.323-SA, SIP-SA die Endgeräte EG1, EG2 erreichbar sind. Diese "Verteilungs-Funktion" ist ein Merkmal des Stack-Adapter-Managers SAM. Dadurch dient der Stack-Adapter-Manager SAM als zentraler Einstiegspunkt der zentralen Steuerung ZS für Nachrichten, die zu einem der Protokoll-Stacks PS1, PS2 und somit zu einem der Stack-Adapter SA1, SA2 gesendet werden.

Das anhand der Figur 2 dargestellte modulare Konzept stellt ein Beispiel für den technischen Aufbau eines Kommunikationssystems zur Verwendung mehrerer Kommunikationsprotokolle dar. Von Bedeutung ist dabei, dass die Besonderheiten unterschiedlicher Protokoll-Stacks PS1, PS2 von den Stack-Adaptern H.323-SA, SIP-SA "weggefiltert" werden und auf ein einheitliches Protokoll (normalisiertes Protokoll, NP) umgesetzt werden. Eine separate Instanz, nämlich der Stack-Adapter-Manager SAM, ist dabei die einzige Verbindungsstelle der zentralen Steuerung ZS mit den Endgeräten EG1, EG2 der unterschiedlichen Kommunikationsprotokolle. Dabei ist die zentrale Steuerung ZS lediglich auf die Benutzung des normalisierten Protokolls NP ausgelegt und braucht nicht auf die Besonderheiten unterschiedlicher Kommunikationsprotokolle ausgerichtet zu sein. Durch diese Architektur sind Veränderungen bzw. Erweiterungen einfach, ggf. sogar während des laufenden Betriebs der zentralen Steuerung ZS, zu bewerkstelligen. Außerdem gestattet diese Architektur eine sog. "plattformunabhängige" Realisierung der Protokoll-Stacks PS1, PS2, weil die Protokoll-Stacks PS1, PS2 nicht direkt mit der zentralen Steuerung ZS kommunizieren und auch nicht in diese integriert sind.

## Patentansprüche

1. Kommunikationssystem (KS) zur Verwendung mehrerer Kommunikationsprotokolle, in dem
- zur Verarbeitung von Nachrichten für jedes der zu verwendenden Kommunikationsprotokolle jeweils ein kommunikationsprotokoll-spezifischer Protokoll-Stack (PS1, PS2) angeordnet ist,
- eine zentrale Steuerung (ZS) angeordnet ist, die zum Austausch von Nachrichten in einem normalisierten Nachrichten-Format (NP) mit einem Stack-Adapter-Manager (SAM) verbunden ist,
- der Stack-Adapter-Manager (SAM) mit einer Mehrzahl Stack-Adaptern (SA1, SA2) zum Austausch der Nachrichten in dem normalisierten Nachrichten-Format (NP) verbunden ist, und
- jeder Stack-Adapter (SA1, SA2) zum Austausch der Nachrichten in einem jeweiligen kommunikationsprotokollspezifischen Nachrichten-Format mit jeweils einem zugeordneten der Protokoll-Stacks (PS1, PS2) verbunden ist,
wobei
- jeder der Stack-Adapter (SA1, SA2) zur Umsetzung der Nachrichten zwischen dem normalisierten Nachrichten-Format (NP) und dem jeweiligen kommunikationsprotokollspezifischen Nachrichten-Format ausgebildet ist,
- der Stack-Adapter-Manager (SAM) für die Weiterleitung der von der zentralen Steuerung (ZS) empfangenen Nachrichten zu demjenigen Stack-Adapter (SA1, SA2) eingerichtet ist, dessen zugeordneter Protokoll-Stack (PS1, PS2) zur Verarbeitung der jeweiligen empfangenen Nachrichten geeignet ist, und
- der Stack-Adapter-Manager (SAM) zur Weiterleitung der von den Stack-Adaptern (SA1, SA2) empfangenen Nachrichten zu der zentralen Steuerung (ZS) ausgebildet ist.

2. Kommunikationssystem (KS) nach Patentanspruch 1,
**dadurch gekennzeichnet, dass**
der Stack-Adapter-Manager (SAM) zur Weiterleitung der von der zentralen Steuerung (ZS) empfangenen Nachrichten mit einer Routing-Funktion ausgestattet ist,
wobei die von der zentralen Steuerung (ZS) empfangenen Nachrichten an zumindest ein Endgerät (EG1, EG2) adressiert sind, und
wobei der Stack-Adapter-Manager (SAM) mit einer Datenbank ausgestattet ist, in der das zumindest eine Endgerät (EG1, EG2) einem der Stack-Adapter (SA1, SA2) zugeordnet ist.

3. Kommunikationssystem (KS) nach Patentanspruch 2, **dadurch gekennzeichnet, dass**
der Stack-Adapter-Manager (SAM) zum Empfang von Endgeräte-Registrierungsinformationen von den Stack-Adaptern (SA1, SA2) ausgebildet ist,
wobei der Stack-Adapter-Manager (SAM) zur Registrierung dieser Endgeräte (EG1, EG2) bei der zentralen Steuerung (ZS) mit den Endgeräte-Registrierungsinformationen eingerichtet ist, und
wobei der Stack-Adapter-Manager (SAM) bei jeder Registrierung eines Endgerätes (EG1, EG2) in seiner Datenbank die Zuordnung dieses Endgerätes (EG1, EG2) zu demjenigen der Stack-Adapter (SA1, SA2) speichert, von dem die Endgeräte-Registrierungsinformationen dieses Endgerätes (EG1, EG2) empfangen wurden.

4. Kommunikationssystem (KS) nach Patentanspruch 2 oder 3,
**dadurch gekennzeichnet, dass**
in der Datenbank des Stack-Adapter-Managers (SAM) Informationen über die von den Endgeräten (EG1, EG2) jeweils unterstützten Nutzdaten-Protokolle gespeichert sind und der Stack-Adapter-Manager (SAM) zur Auswahl und Zuweisung eines der Nutzdaten-Protokolle für eine aufzubauende direkte Nutzdatenverbindung zwischen Endgeräten (EG1, EG2) ausgebildet ist.

5. Kommunikationssystem (KS) nach einem der vorhergehenden Patentansprüche,
**dadurch gekennzeichnet, dass**
eines der Kommunikationsprotokolle das IETF-SIP-Protokoll ist und / oder eines der Kommunikationsprotokolle das H.323-Protokoll ist.

6. Verfahren zur Verwendung mehrerer Kommunikationsprotokolle in einem Kommunikationssystem (KS),
wobei zur Übertragung einer Steuernachricht von einer zentralen Steuerung (ZS) des Kommunikationssystems (KS) zu einem Endgerät (EG1, EG2) folgende Verfahrensschritte nacheinander ausgeführt werden:
- Übertragung der mit einer Adressinformation des Endgerätes (EG1, EG2) versehenen Steuernachricht gemäss eines normalisierten Formates (NP) von der zentralen Steuerung (ZS) zu einem Stack-Adapter-Manager (SAM),
- Entscheidung in dem Stack-Adapter-Manager (SAM), welches einer Mehrzahl von Kommunikationsprotokollen diesem Endgerät (EG1, EG2) zugeordnet ist, wobei die Entscheidung durch Abruf eines der Adressinformation zugeordneten Datensatzes aus einer Datenbank getroffen wird, wobei der Datensatz das Kommunikationsprotokoll angibt,
- Übertragung der Steuernachricht in dem normalisierten Format (NP) von dem Stack-Adapter-Manager (SAM) zu einem dem zugeordneten Kommunikationsprotokoll entsprechenden Stack-Adapter (SA1, SA2),
- Umsetzung der Steuernachricht in das Format des zugeordneten Kommunikationsprotokolls durch den Stack-Adapter (SA1, SA2),
- Übertragung der umgesetzten Steuernachricht zu einem dem Stack-Adapter (SA1, SA2) zugeordneten Protokoll-Stack (PS1, PS2),
- Verarbeitung der Steuernachricht durch den Protokoll-Stack (PS1, PS2), und
- Weiterleitung der verarbeiteten Steuernachricht von dem Protokoll-Stack (PS1, PS2) zu dem Endgerät (EG1, EG2).
